# FASCICULE DE BREVET EUROPEEN

(11) **EP 0 276 754 B1**
(45) Date de publication et mention de la délivrance du brevet: **10.03.1993**
(21) Numéro de dépôt: 88100832.0
(22) Date de dépôt: 21.01.1988
(51) Int. Cl.: H04Q 3/00, H04M 7/00, H04Q 11/04

(54) **Procédé de routage des communications pour réseau d'autocommutateurs temporels numériques**
Nachrichtenwegesuchverfahren für Netzwerk von digitalen Zeitmultiplexvermittlungsanlagen
Communication routing method for a digital time division exchange network

(30) Priorité: 23.01.1987 FR 8700775
(43) Date de publication de la demande: 03.08.1988
(73) Titulaire: ALCATEL BUSINESS SYSTEMS, F-75008 Paris (FR)
(72) Inventeur: MEJANE, Jean-Romain, F-95240 CORMEILLES EN PARISIS (FR)
(74) Mandataire: Weinmiller, Jürgen

(56) Documents cités:
- DE-B- 1 165 680
- FR-A- 1 458 269
- US-A- 3 394 231
- US-A- 4 532 625
- INTERNATIONAL TELETRAFFIC CONGRESS, vol. 5, septembre 1985, 3ages 795-801, Elsevier Science Publishers B.V. (North-Holland), Amsterdam, NL; G.R. ASH: "Use of trunk status map for real-time DNHR"
- COLLOQUE INTERNATIONAL DE COMMUTATION, "INTERNATIONAL SWITCHING SYMPOSIUM", Paris, 7-11 mai 1979, pages 171-177, FR; E. SZYBICKI et al.: "L'introduction d'un système d'acheminement évolué dans les réseaux numériques locaux et son impact sur le coût, la fiabilité et la qualité d'écoulement du trafic des réseaux"
- INTERNATIONAL TELETRAFFIC CONGRESS, vol. 5, septembre 1985, pages 861-866, Elsevier Science Publishers B.V., (North-Holland) Amsterdam, NL; J.M. GARCIA et al.: "Comparative evaluation of centralized/distributed traffic routing policies in telephone networks"

## Description

La présente invention a pour objet un procédé de routage des communications pour réseau d'autocommutateurs temporels numériques reliés entre eux par des artères composées chacune d'une ou plusieurs jonctions MIC. Elle concerne plus spécifiquement les réseaux d'autocommutateurs mono ou multiservices qui sont distincts des réseaux publics avec lesquels ils sont éventuellement reliés au niveau d'au moins certains noeuds.

Les procédés de routage mis en oeuvre dans les réseaux téléphoniques publics ont généralement été conçus pour des exploitations comprenant un grand nombre de noeuds desservis par des artères composées de liaisons multiples.

Ces réseaux publics sont la plupart du temps composés à l'aide de matériels d'âges et par conséquent de technologies différentes conçus de manière à rester compatibles. La taille des réseaux publics et/ou la disparité des matériels qui les constituent, imposent des contraintes spécifiques dont il faut tenir compte en gestion et notamment pour le routage des communications. Ceci conduit donc à des choix qui peuvent être différents de ceux que l'on peut faire dans un réseau plus petit et/ou composé de matériels homogènes.

Le document US-A-4 532 625 décrit un système d'information sur l'état d'un réseau de communication dans lequel chaque noeud du réseau conserve des informations sur l'état de tous les noeuds et de toutes les liaisons entre noeuds, ces informations sont mises à jour en temps quasi réel par diffusion périodique entre les noeuds.

Chaque noeud a la possibilité de définir l'itinéraire local à suivre, par les communications d'origine locale et pour celles qui transitent par lui-même, en fonction de l'existence ou non de liaisons en état de fonctionnement entre lui-même et les noeuds voisins auxquels il est relié.

Le document FR-A-1 485 269 décrit un système de contrôle et de répartition de trafic entre des noeuds de communication qui est organisé autour d'un ou de plusieurs centres de commande chargés des choix d'itinéraires de communication.

Un centre de commande établit un choix en cherchant quel est l'itinéraire le plus direct possible pour une communication à établir et en vérifiant que les charges actuelles de trafic sur cet itinéraire le plus direct restent inférieures à des valeurs de référence prédéterninées; le choix d'un itinéraire alternatif s'effectue avec les mêmes critères.

La présente invention propose donc un procédé pour le routage des communications dans un réseau d'autocommutateurs interconnectés par des faisceaux de liaisons où chaque autocommutateur produit des informations relatives à l'état des laisons reliées à lui, diffuse par contagion, vers les autres autocommutateurs, les informations d'état qu'il produit ou reçoit et en mémorise la dernière mise à jour en vue de l'établissement par lui-même d'itinéraires de communication.

Selon une caractéristique de l'invention, l'établissement d'une communication, à partir d'un autocommutateur, est obtenue à l'aide d'un message d'établissement d'itinéraire produit par cet autocommutateur à partir des informations d'état des faisceaux du réseau qu'il a mémorisé et à l'aide d'un algorithme connu de recherche de plus court chemin, et transmis au fur et à mesure de l'établissement de cet itinéraire par les autocommutateurs traversés, les messages d'établissement d'itinéraire et les informations d'état étant comparablement transmis d'un autocommutateur à un autocommutateur suivant tant que nécessaire, chaque autocommutateur interrompant la transmission des informations d'état et des parties de message d'itinéraires qu'il a reçues et qui sont devenues superflues.

L'invention, ses caractéristiques et ses avantages sont décrits dans la description qui suit en liaison avec les figures répertoriées ci-dessous.

La figure 1 présente le schéma d'un autocommutateur temporel permettant la mise en oeuvre du procédé selon l'invention.

La figure 2 présente un exemple schématique de réseau d'autocommutateurs.

La figure 3 présente un exemple de fonction coût/seuil d'occupation.

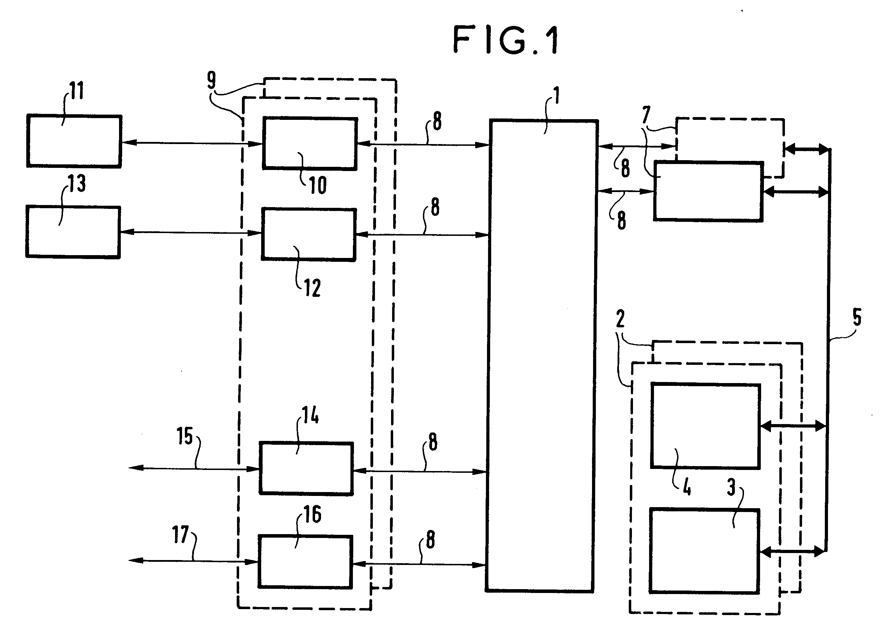

L'autocommutateur temporel numérique présenté figure 1 est par exemple du type décrit dans l'article "L'autocommutateur multiservice OPUS 4000" publié par MM. BAUDOIN, LE, MEJANE, SEVEQUE, ANIZAN dans le numéro 4 de 1985 de la revue "Commutation et Transmission".

Cet autocommutateur temporel numérique qui est de type multiservice permet de mettre en communication des postes et terminaux téléphoniques entre eux par l'intermédiaire du réseau de connexion temporel 1 qu'il comporte, soit directement si les postes ou terminaux à mettre en communication sont rattachés à l'autocommutateur considéré, soit via d'autres autocommutateurs identiques ou compatibles.

Le réseau de connexion temporel 1 est placé sous le contrôle d'une unité centrale 2, qui regroupe un ou plusieurs processeurs 3 dans une structure le plus souvent dupliquée pour des raisons de sécurité.

Un ensemble de mémoires 4 est classiquement associé aux processeurs 3 dans l'unité centrale pour la conservation des programmes de gestion et des données nécessaires au fonctionnement de l'autocommutateur, en particulier dans le cas présent des programmes et données nécessaires au routage.

Les mémoires de l'ensemble 4 et les processeurs 3 sont classiquement reliés entre eux par un ou plusieurs bus 5 qui desservent également des coupleurs ayant accès au réseau de connexion 1.

Dans l'exemple présenté, on a figuré un ensemble de plusieurs coupleurs 7 qui sont connectés au réseau de connexion par des liaisons multiplexes temporelles bidirectionnelles 8. Les coupleurs 7 sont par exemple des coupleurs de signalisation par lesquels transite toutes les signalisations téléphonique destinées à être traités par l'autocommutateur.

Les liaisons temporelles 8 sont ici de classiques liaisons à trente deux voies dans lesquelles la voie de rang zéro est réservée à la synchronisation et la voie de range seize réservée à la signalisation alors que les trente autres voies permettent la transmission d'échantillons de parole codés MIC ou de données, se présentant les uns et les autres sous forme d'octets.

Le réseau de connexion 1 est de type temporel sans blocage commutant des paroles, des données et de la signalisation entre les différentes voies des liaisons temporelles 8 reliées à lui. Ces dernières, dont certaines sont affectées à des coupleurs 7 comme indiqué plus haut, desservent également des unités de raccordement 9 locales ou décentralisées.

Ces unités de raccordement 9 assurent le multiplexage et le démultiplexage des informations de parole, de données et de signalisation à commuter ou déjà commutées par le réseau de connexion 1 ; elles contiennent aussi des équipements d'interface avec les postes, terminaux ou liaisons externes téléphoniques qui aboutissent à l'autocommutateur.

Les équipements d'interface sont par exemple du type :
- équipement de ligne analogique 10 destiné à permettre l'usage d'un poste téléphonique ou terminal télématique 11 pour lesquels les informations sont transmises sous form analogique :
- équipment de ligne numérique 12 permettant le raccordement de postes téléphoniques ou de terminaux numériques 13 pour lesquels les informations de parole, de données et de signalisation sont transmises sous forme numérique ;
- joncteur de liaison analogique 16 pour ligne réseau téléphonique analogique 17 reliant l'autocommutateur à un autocommutateur distant ;
- joncteur de liaison multiplexe 14 pour liaison multiplexe temporelle MIC 15 reliant l'autocommutateur à un autocommutateur distant.

Bien entendu, il n'y a pas de multiplexage ou de démultiplexage à effectuer dans une unité de raccordement 9 pour les liaisons multiplexes 15 reliant cette unité à un autocommutateur distant.

Dans l'exemple proposé les liaisons multiplexes temporelles 15 sont elles aussi des liaisons à trente-deux voies comme les liaisons temporelles 8, elles ont donc un débit de 2048 Mbit/s.

C'est dans l'autocommutateur local aquel est rattaché un poste ou terminal 11 ou 13 que s'effectuent les opérations de routage des communications à partir de ce poste ou terminal, dans le cas ou l'autocommutateur fait partie d'un réseau homogène comprenant d'autres autocommutateurs identiques ou compatibles avec lui avec lesquels il communique par l'intermédiaire de liaisons multiplexes 15.

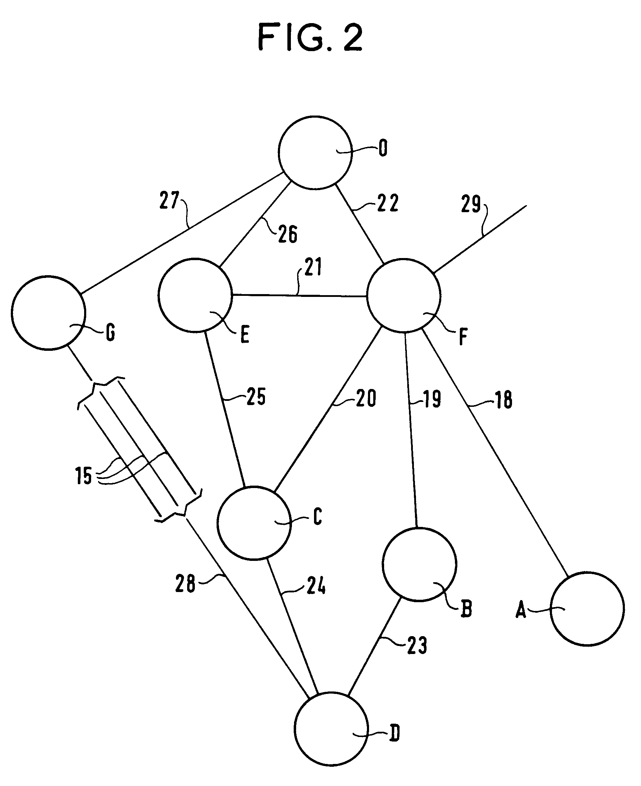

Dans l'exemple proposé, le réseau dans lequel on met en oeuvre le procédé de routage selon l'invention est composé d'une pluralité d'autocommutateurs, tels les autocommutateurs A, B, C, D, E, F et O sur la figure 2.

Ces autocommutateurs sont reliés entre eux en point à point par des faisceaux 18 à 28 reliant chacun deux autocommutateurs par une ou plusieurs artères temporelles MIC constituées chacune par une liaison multiplexe 15 comme on le voit pour les trois artères du faisceau 28 reliant les autocommutateurs D et G.

Bien entendu le réseau peut aussi être connecté au niveau d'un ou de plusieurs autocommutateurs à d'autres autocommutateurs qui ne sont pas susceptibles de faire partie du réseau en raison d'incompatibilités diverses tel par exemple l'autocommutateur F relié via un faisceau 29 de liaisons analogiques à un autocommutateur de type spatial non représenté. Le réseau considéré peut aussi être un réseau privé connecté à un réseau public par un ou plusieurs de ses autommutateurs, ce réseau public étant géré de manière différente et ne permettant la mise en oeuvre du procédé de routage, décrit ci-dessous, qu'à l'intérieur du réseau privé.

Chaque autocommutateur du réseau mettant en application le procédé de routage selon l'invention détermine un "coût d'utilisation" pour chacun des faisceaux le reliant à un autre autocommutateur du réseau, soit pour les faisceaux 18, 19, 20, 21, 22 mais pas pour le faisceau 29 en ce qui concerne l'autocommutateur F relié aux autocommutateurs A, B, C, E, O par ces cinq faisceaux 18 à 22.

Dans le cas présent, on appelle coût d'utilisation d'un faisceau entre deux autocommutateurs, un facteur établi à partir du taux d'occupation de l'artère, ou liaison multiplexe temporelle 15, la moins chargée d'un faisceau, ou liaison multiplexe temporelle 15, la moins chargée d'un faisceau.

A cet effet chaque autocommutateur détermine par l'intermédiaire de son unité centrale 2, les taux d'occupation des différentes artères appartenant aux faisceaux qui le relient à d'autres autocommutateurs du réseau.

Les deux autocommutateurs reliés aux extrémités d'un même faisceau déterminent séparément chacun les taux d'occupation des artères de ce faisceau et à partir de ceux-ci le taux d'occupation de l'artère la moins chargée, ce qui implique que le même faisceau peut possèder un taux d'occupation différent pour chacun des deux autocommutateurs qu'elle relie.

Dans la mesure où chaque autocommutateur mémorise classiquement déjà en unité centrale une carte de l'état des voies des liaisons multiplexes temporelles constituant les artères reliées à lui et où cette carte est mise à jour en temps réel, il suffit donc de faire déterminer par un banal traitement dans cette unité centrale quelle est l'artère d'un faisceau qui a le moins de voies occupées.

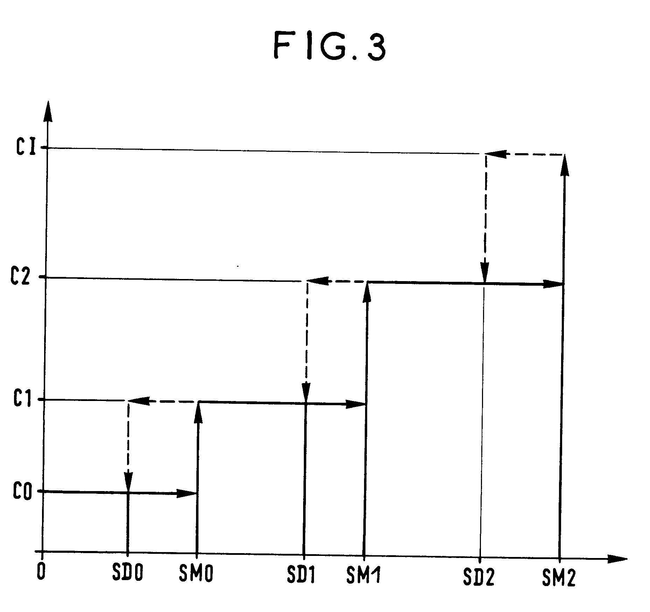

Dans une forme préférée de réalisation on définit le coût d'un faisceau par une fonction à seuils du taux d'occupation de l'artère la moins chargée, ainsi qu'on le voit sur la figure 3.

La fonction comporte par exemple trois seuils montants, SM0, SM1, SM2 dont les valeurs sont fixées par l'exploitant du réseau qui peut les modifier par action sur les données du programmes d'exploitation, si besoin est.

A chaque passage de seuil correspond une valeur discrète de coût. Une première valeur de coût à vide CO permet de privilégier le trafic dans le réseau au travers d'un faisceau par rapport aux autres, issus du même autocommutateur, ou dans un ramification de plus d'un faisceau par rapport à d'autres. On attribue par exemple a cet effet un coût plus faible au faiscau 23 qu'au faisceau 24, l'un et l'autre vus de l'autocommutateur D, afin de favoriser le transit des communications par l'autocommutateur B plutôt que par l'autocommutateur C.

A chaque passage de seuil en trafic montant pour un faisceau donné vu par un autocommutateur, il y a augmentation du coût d'utilisation correspondant depuis la valeur CO de coût à vide jusqu'à la valeur CI de coût infini qui correspond à une indisponibilité du faisceau, en passant par exemple par une valeur C1 qui correspond à un seuil montant SMO de cinq voies occupées sur la liaison la moins chargée et par une valeur C2 qui correspond à un seuil montant SM1 de voies dans le sens des trafics croissants.

On attribue des valeurs plus faibles aux valeurs de seuil en trafic décroissant SD0, SD1, SD2 qu'aux valeurs de seuil en trafic montant SM0, SM1, SM2 pour éviter les changements incessants de coût, de type oscillation, lorsque le trafic sur l'artère la moins chargée est au voisinage d'un valeur de seuil montant.

De manière connue en soi, les coûts d'utilisation des faisceaux d'un autocommutateur sont traduits sous forme binaire, dans l'exemple simplifié ici présenté par un mot de deux bits pour quatre valeurs de coût CO à CI, et chaque autocommutateur associe le coût de chaque faisceau à une information permettant d'identifier ce faisceau tant en vue de mémoriser cette information que de la diffuser aux autres autocommutateurs du réseau.

Dans une forme préféré de réalisation chaque autocommutateur produit un message dit de mise à jour suite à chaque modification notable du coût d'utilisation d'un faisceau relié à lui, c'est-à-dire aux passages de seuil.

Ce message comporte :
- une information identifiant l'autocommutateur concerné et le faisceau concerné par exemple par un élément de message indiquant les deux extrémités du faisceau concerné, tel par exemple les extrémités O et F du faisceau OF, la première extrémité mentionnée correspondant par exemple à l'autocommutateur O qui est à l'origine du message ;
- un numéro d'ordre identifiant la mise à jour pour le faisceau considéré, ce numéro pouvant classiquement être obtenu par incrémentation d'une unité par rapport au numéro d'ordre de la mise à jour précédente pour le même faisceau vu du même autocommutateur;
- l'information du coût d'utilisation actuel, dit opérationnel du faisceau identifié.

Chaque message de mise à jour, classiquement mis sous forme binaire est ensuite transmis par l'autocommutateur concerné par la voie de signalisation d'une des artères, par exemple la moins chargée, des différents faisceaux reliés à lui afin d'être transmis à tous les autocommutateurs auquel cet autocommutateur est relié, tel par exemple par l'autocommutateur C vers les autocommutateurs E, F, D via les faisceaux 25, 20, 24.

Chacune des autocommutateurs recevant un message de mise à jour le transmet à tous ses voisins, sauf celui qui le lui a transmis, tel l'autocommutateur D vers B et G, chaque message de mise à jour est donc transmis par contagion à tous les autocommutateurs du réseau, chacun vérifiant par comparaison du numéro d'ordre du message s'il a ou non déjà reçu ce message et d'une part le mémorisant d'autre part le réémettant vers les autres, si ce message est nouveau pour lui.

De plus périodiquement, à un rythme modifiable par l'exploitant du réseau, chaque autocommutateur réémet les différentes mises à jour précisant les coûts d'utilisation alors opérationnels qu'il a établi ; les numéros d'ordre de ces mises à jour restent inchangés, ce qui permet aux autres autocommutateurs de vérifier si les informations qu'ils possèdent sont exactes et éventuellement de les mettre à jour.

Tous les autocommutateurs d'un réseau ont donc normalement à tout moment une connaissance des coûts des différents faisceaux du réseau et chacun d'entre eux est donc à même de définir les chemins pour les communications demandées par son intermédiaire.

La recherche d'un itinériaire par l'unité centrale d'un autocommutateur s'effectue à l'aide d'un algorithme de recherche de plus court chemin, qui est de type connu tel celui de DIJKSTRA, rappelé notamment dans l'article "A Theorem on the expected complexity of DIJKSTRA's shortest path algorithm" publié dans le numéro 3 du volume 6 de 1985 de "JOURNAL OF ALGORITHMS" par K.NOSHITA.

Cette recherche détermine le chemin de moindre coût en prenant en compte le coût des différents faisceaux empruntés et le nombre d'autocommutateurs traversés pour établir une communication au travers du réseau, par exemple entre les autocommutateurs O et D via soit l'autocommutateur G et les faisceaux 15 et 27 soit toutes les possibilités empruntant au moins deux des autocommutateurs E, C, F et B.

La recherche effectuée pour une communication donnée vers un autocommutateur donné à partir d'un autre autocommutateur donné est effectuée apr ce dernier, elle le conduit à établir un message d'établissement de chemin précisant les différents autocommutateurs à traverser. Ce message est émis par l'autocommutateur ayant fait la recherche, vers l'autocommutateur du chemin auquel il est relié par un faisceau. A cet effet la voie de signalisation d'une des artères du faisceau concerné tel par exemple une artère du faisceau 26 pour l'autocommutateur d'origine O, transmet au cours d'intervalles successifs de temps de voie IT 16, la suite des codes E, C, D identifiant les autocommutateurs traversés par l'itinéraire, jusqu'au dernier d'entre eux D auquel aboutit la communication considérée.

Chaque autocommutateur concerné, tel E, commute le message qu'il reçoit sur le faisceau desservant l'autocommutateur suivant désigné, ici C, après avoir analysé au moyen de son unité centrale, le message reçu et après avoir retiré au passage la partie de ce message qui le concernait personnellement.

De manière classique, au cas où le chemin ne peut être établi, en raison d'une indisponibilité d'un faisceau apparaissant après choix du chemin et avant son établissement complet, la communication est rejetée et l'appel doit être renouvelé afin d'obtenir un nouveau chemin.

## Revendications

1. Procédé pour le routage des communications dans un réseau d'autocommutateurs (A à F et O)interconnectés par des faisceaux (18 à 28) de liaisons, dans lequel chaque autocommutateur produit des informations relatives à l'état des liaisons reliées à lui, diffuse par contagion , vers les autres autocommutateurs, les informations d'état qu'il produit ou reçoit et en mémorise la dernière mise à jour, en vue de l'établissement par lui-même d'itinéraires de communication au travers du réseau, caractérisé en ce que l'établissement d'une communication, à partir d'un autocommutateur, est obtenue à l'aide d'un message d'établissement d'itinéraire produit par cet autocommutateur à partir des informations d'état des faisceaux du réseau qu'il a mémorisé et à l'aide d'un algorithme connu de recherche de plus court chemin, et transmis au fur et à mesure de l'établissement de cet itinéraire par les autocommutateurs traversés, les messages d'établissement d'itinéraire et les informations d'état étant comparablement transmis d'un autocommutateur à un autocommutateur suivant tant que nécessaire, chaque autocommutateur interrompant la transmission des informations d'état et des parties de message d'itinéraires qu'il a reçues et qui sont devenues superflues.

2. Procédé pour le routage selon la revendication 1, caractérisé en ce que chaque autocommutateur détermine en temps réel un coût d'utilisation (CO, C1, C2 ,C3) pour chacun des faisceaux reliés à lui, à partir du taux d'occupation de la liaison temporelle MIC la moins chargée du faisceau, qu'il détermine lui-même, afin de diffuser une mise à jour d'information d'état, en cas de modification significative d'un coût d'utilisation d'un faisceau, cette mise à jour comportant un numéro d'ordre de mise à jour afin de permettre l'arrêt de la transmission de cette mise à jour, lorsque cette transmission devient superflue, et précisant de plus l'identité de l'autocommutateur qui lui a donné naissance, celle du faisceau concerné et un nouveau coût d'utilisation à prendre en compte pour ce faisceau.

## Claims

1. A method of routing calls in an automatic exchange network interconnected via communication bundles (18 to 28) wherein each exchange (A to F, O) generates information relative to the state of the links connected to it, passes by contagion the information generated or received by it to the other exchanges, and stores the latest updating of the information in view of setting up by it itself the transmission route, characterized in that the setting up of a connection from an automatic exchange is obtained by means of a routing setup message generated by said exchange from information about the state of the bundles of the network stored by it and by means of a known search algorithm on the shortest path, said message being transmitted in correspondance with the setting up of said routing by the traversed exchanges, with the routing setup messages and the state information being comparably transmitted from one exchange to another exchange according to the needs, each exchange interrupting the transmission of state information and of parts of the routing message that is has received and that have become superfluous.

2. A routing method according to claim 1, characterized in that each exchange determines in real time a utilization cost (C0, C1, C2, C3) for each of the bundles connected to it, on the basis of the busy fraction of the PCM-time-switched link of the least busy bundle, which it determines itself, in order to broadcast a state information update in the event of a significant modification in the utilization cost of a bundle, said update comprising at least the update order number in order to allow for stopping the transmission of said update, when said transmission becomes superfluous, and itemizing in addition the identity of the exchange which generated said update, the identity of the concerned bundle and the new utilization cost to be taken into account for said bundle.

## Patentansprüche

1. Verfahren zur Leitwegbestimmung für Nachrichten in einem Netz von Vermittlungszentralen, die untereinander durch Bündel von Strecken (18 bis 28) verbunden sind, wobei jede Zentrale Informationen über den Zustand der mit ihr verbundenen Strekken erzeugt, durch direkten Kontakt Zustandsinformationen, die sie erzeugt oder empfängt, anderen Zentralen mitteilt und die letzte Aktualisierung derselben speichert, um selber Verbindungsleitwege durch das Netz zu erstellen, dadurch gekennzeichnet, daß der Aufbau einer von einer Zentrale ausgehenden Verbindung mit Hilfe einer Leitwegerstellungsnachricht erhalten wird, die von der betreffenden Zentrale aus den gespeicherten Zustandsinformationen der Bündel des Netzes und mit Hilfe eines bekannten Suchalgorithmus für den kürzesten Weg erzeugt wird und im Zuge der Erstellung des Leitweges durch die durchlaufenen Zentralen übertragen wird, wobei die Leitwegerstellungsnachrichten und die Zustandsinformationen in gleicher Weise von der einen Zentrale zur nächsten übertragen werden, soweit erforderlich, und wobei jede Zentrale die Übertragung der Zustandsinformationen und derjenigen Teile der Leitwegnachrichten unterbricht, die sie erhalten hat und die überflüssig geworden sind.

2. Verfahren zur Leitwegbestimmung nach Anspruch 1, dadurch gekennzeichnet, daß jede Zentrale aus dem Besetzungsgrad des am wenigsten belasteten Bündels der Zeitmultiplex-PCM-Strecke, das sie selber bestimmt, in Echtzeit die Benutzungskosten (CO, C1, C2, C3) für jedes an sie angeschlossene Bündel ermittelt, um im Falle einer erheblichen Änderung der Benutzungskosten eines Bündels eine Aktualisierung der Zustandsinformation auszusenden, wobei die Aktualisierung eine laufende Aktualisierungsnummer einschließt, um die Sperrung der Übertragung dieser Aktualisierung zu ermöglichen, und weiter die Identität der Zentrale, die die Aktualisierung veranlaßt hat, die Identität des betroffenen Bündels und die neuen Benutzungskosten angibt, die für das betreffende Bündel in Betracht kommen.
